# EUROPEAN PATENT APPLICATION

(11) **EP 4 478 624 A1**
(43) Date of publication of application: **18.12.2024**
(21) Application number: 23179769.7
(22) Date of filing: 16.06.2023
(51) Int. Cl.: H04B 7/06

(54) **METHOD, APPARATUS AND COMPUTER PROGRAM**

(71) Applicant: Nokia Technologies Oy, 02610 Espoo (FI)
(72) Inventor: ARVOLA, Antti, 90570 OULU (FI); TÖLLI, Antti, 90650 OULU (FI); GOUDA, Bikshapathi, 90570 OULU (FI); KARJALAINEN, Juha Pekka, 88600 SOTKAMO (FI); HAKOLA, Sami-Jukka, 90450 KEMPELE (FI); KOSKELA, Timo, 90670 OULU (FI)
(74) Representative: Page White Farrer

(57) **Abstract**

There is provided a first device comprising means for: transmitting, to a second device, information indicating the geometry of a plurality of non-planar antennas of the first device; determining at least two reference antennas of the plurality of non-planar antennas based on the information indicating the geometry of the plurality of non-planar antennas; and transmitting, to the second device, reference signals via the determined at least two reference antennas while not transmitting reference signals via a remainder of the plurality of non-planar antennas.

## Description

### FIELD

The present application relates to a method, apparatus, system and computer program and in particular but not exclusively to the determining of antennas for performing transmissions.

### BACKGROUND

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

In a wireless communication system at least a part of a communication session between at least two stations occurs over a wireless link. Examples of wireless systems comprise public land mobile networks (PLMN), satellite based communication systems and different wireless local networks, for example wireless local area networks (WLAN). Some wireless systems can be divided into cells, and are therefore often referred to as cellular systems.

A user can access the communication system by means of an appropriate communication device or terminal. A communication device of a user may be referred to as user equipment (UE) or user device. A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (3G radio). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP).

### SUMMARY

According to an aspect, there is provided a first device comprising means for transmitting, to a second device, information indicating the geometry of a plurality of non-planar antennas of the first device; determining at least two reference antennas of the plurality of non-planar antennas based on the information indicating the geometry of the plurality of non-planar antennas; and transmitting, to the second device, reference signals via the determined at least two reference antennas while not transmitting reference signals via a remainder of the plurality of non-planar antennas.

The means may be further for: determining at least one subset of the plurality of non-planar antennas for further transmission to the second device, wherein, from a planar perspective, the at least two reference antennas are outermost antennas of the at least one subset; and transmitting, to the second device using the determined at least one subset of the plurality of antennas, the further transmission.

The determined at least one subset of the plurality of non-planar antennas may be comprised in a uniform planar array structure or a uniform linear array structure.

The information indicating the geometry of the plurality of non-planar antennas may comprise information for determining channel state information for at least a subset of the plurality of non-planar antennas based on the reference signals transmitted via the determined at least two reference antennas.

The information indicating the geometry of the plurality of non-planar antennas may comprise information indicating the position and/or orientation of the plurality of non-planar antennas relative to at least one of the at least two reference antennas.

The information indicating the geometry of the plurality of non-planar antennas may comprise one or more of: information indicating at least one of: an identifier, entity, manufacturer and/or model of the first device; a vector map comprising, for each of the plurality of non-planar antennas, a vector defining the location of an antenna with respect to at least one of the at least two reference antennas; information indicating the location of the at least two reference antennas and information indicating the total number of antennas in the plurality of non-planar antennas and/or a rule for determining the position of each of the plurality of non-planar antennas; information defining at least one further subset of the plurality of non-planar antennas, wherein the information defining the at least one further subset comprises information indicating at least one further reference antenna indicating a starting location of the at least one further subset, information indicating the size of the at least one further subset, and information indicating an orientation of the at least one further subset; or information identifying that one or more of the plurality of non-planar antennas are dedicated for use with certain frequencies.

When the information indicating the geometry of the plurality of non-planar antennas comprises the vector map, a length of each vector may be defined relative to a vector between at least two of the reference antennas.

When the information indicating the geometry of the plurality of non-planar antennas comprises information defining the at least one further subset of the plurality of non-planar antennas, the information defining the at least one further subset may further comprise a distribution rule of antennas in the at least one further subset and/or a shape of the at least one further subset.

According to an aspect there is provided a second device comprising means for: receiving, from the first device, information indicating the geometry of a plurality of non-planar antennas of a first device; based on the information, determining at least two reference antennas of the plurality of non-planar antennas; and receiving, from the first device, reference signals via the determined at least two reference antennas while not receiving reference signals via a remainder of the plurality of non-planar antennas.

The information indicating the geometry of the non-planar antennas may comprise information for determining channel state information for at least a subset of the plurality of non-planar antennas based on the reference signals sent via the determined at least two reference antennas.

The means may be further for: receiving, from the first device, a further transmission from at least one subset of the plurality of non-planar antennas, wherein, from a planar perspective, the at least two reference antennas are outermost antennas of the at least a subset.

The means may be further for: based on the information indicating the geometry of the plurality of non-planar antennas and the received reference signals, determining channel state information for the plurality of non-planar antennas; wherein receiving the further transmission is based on the determined channel state information.

The at least one subset of the plurality of non-planar antennas may be comprised in a uniform planar array structure or a uniform linear array structure.

The information indicating the geometry of the plurality of non-planar antennas may comprise information indicating the position and/or orientation of the plurality of non-planar antennas relative to at least one of the at least two reference antennas.

The information indicating the geometry of the plurality of non-planar antennas may comprise one or more of: information indicating at least one of: an identifier, entity, manufacturer and/or model of the first device; a vector map comprising, for each of the plurality of non-planar antennas, a vector defining the location of an antenna with respect to at least one of the at least two reference antennas; information indicating the location of the at least two reference antennas and information indicating the total number of antennas in the plurality of non-planar antennas and a rule for determining the position of each of the plurality of non-planar antennas; information defining at least one further subset of the plurality of non-planar antennas, wherein the information defining the at least one further subset comprises information indicating at least one further reference antenna indicating a starting location of the at least one further subset, information indicating the size of the at least one further subset, and information indicating an orientation of the at least one further subset; or information identifying that one or more of the plurality of non-planar antennas are dedicated for use with certain frequencies

When the information indicating the geometry of the plurality of non-planar antennas comprises the vector map, a length of each vector may be defined relative to a vector between at least two of the reference antennas.

When the information indicating the geometry of the plurality of non-planar antennas comprises information defining the at least one further subset of the plurality of non-planar antennas, the information defining the at least one further subset may further comprises a distribution rule of antennas in the at least one further subset and/or a shape of the at least one further subset.

When the information indicating the geometry of the plurality of non-planar antennas comprises information indicating at least one of: an identifier, entity, manufacturer and/or model of the first device, the means may be further for: obtaining, from a reference database and based on at least one of the identifier, entity, manufacturer and/or model of the first device, position information of the plurality of non-planar antennas of the first device.

According to an aspect, there is provided a first device comprising at least one processor and at least one memory storing instructions that, when executed by the at least one processor, cause the first device at least to: transmit, to a second device, information indicating the geometry of a plurality of non-planar antennas of the first device; determine at least two reference antennas of the plurality of non-planar antennas based on the information indicating the geometry of the plurality of non-planar antennas; and transmit, to the second device, reference signals via the determined at least two reference antennas while not transmitting reference signals via a remainder of the plurality of non-planar antennas.

The at least one processor may further cause the first device to: determine at least one subset of the plurality of non-planar antennas for further transmission to the second device, wherein, from a planar perspective, the at least two reference antennas are outermost antennas of the at least one subset; and transmit, to the second device using the determined at least one subset of the plurality of antennas, the further transmission.

The determined at least one subset of the plurality of non-planar antennas may be comprised in a uniform planar array structure or a uniform linear array structure.

The information indicating the geometry of the plurality of non-planar antennas may comprise information for determining channel state information for at least a subset of the plurality of non-planar antennas based on the reference signals transmitted via the determined at least two reference antennas.

The information indicating the geometry of the plurality of non-planar antennas may comprise information indicating the position and/or orientation of the plurality of non-planar antennas relative to at least one of the at least two reference antennas.

The information indicating the geometry of the plurality of non-planar antennas may comprise one or more of: information indicating at least one of: an identifier, entity, manufacturer and/or model of the first device; a vector map comprising, for each of the plurality of non-planar antennas, a vector defining the location of an antenna with respect to at least one of the at least two reference antennas; information indicating the location of the at least two reference antennas and information indicating the total number of antennas in the plurality of non-planar antennas and/or a rule for determining the position of each of the plurality of non-planar antennas; information defining at least one further subset of the plurality of non-planar antennas, wherein the information defining the at least one further subset comprises information indicating at least one further reference antenna indicating a starting location of the at least one further subset, information indicating the size of the at least one further subset, and information indicating an orientation of the at least one further subset; or information identifying that one or more of the plurality of non-planar antennas are dedicated for use with certain frequencies.

When the information indicating the geometry of the plurality of non-planar antennas comprises the vector map, a length of each vector may be defined relative to a vector between at least two of the reference antennas.

When the information indicating the geometry of the plurality of non-planar antennas comprises information defining the at least one further subset of the plurality of non-planar antennas, the information defining the at least one further subset may further comprise a distribution rule of antennas in the at least one further subset and/or a shape of the at least one further subset.

According to an aspect, there is provided a second device comprising at least one processor and at least one memory storing instructions that, when executed by the at least one processor, cause the second device at least to: receive, from the first device, information indicating the geometry of a plurality of non-planar antennas of a first device; based on the information, determine at least two reference antennas of the plurality of non-planar antennas; and receive, from the first device, reference signals via the determined at least two reference antennas while not receiving reference signals via a remainder of the plurality of non-planar antennas.

The information indicating the geometry of the non-planar antennas may comprise information for determining channel state information for at least a subset of the plurality of non-planar antennas based on the reference signals sent via the determined at least two reference antennas.

The at least one processor may further cause the second device to: receive, from the first device, a further transmission from at least one subset of the plurality of non-planar antennas, wherein, from a planar perspective, the at least two reference antennas are outermost antennas of the at least a subset.

The at least one processor may further cause the second device to: based on the information indicating the geometry of the plurality of non-planar antennas and the received reference signals, determine channel state information for the plurality of non-planar antennas; wherein receiving the further transmission is based on the determined channel state information.

The at least one subset of the plurality of non-planar antennas may be comprised in a uniform planar array structure or a uniform linear array structure.

The information indicating the geometry of the plurality of non-planar antennas may comprise information indicating the position and/or orientation of the plurality of non-planar antennas relative to at least one of the at least two reference antennas.

The information indicating the geometry of the plurality of non-planar antennas may comprise one or more of: information indicating at least one of: an identifier, entity, manufacturer and/or model of the first device; a vector map comprising, for each of the plurality of non-planar antennas, a vector defining the location of an antenna with respect to at least one of the at least two reference antennas; information indicating the location of the at least two reference antennas and information indicating the total number of antennas in the plurality of non-planar antennas and a rule for determining the position of each of the plurality of non-planar antennas; information defining at least one further subset of the plurality of non-planar antennas, wherein the information defining the at least one further subset comprises information indicating at least one further reference antenna indicating a starting location of the at least one further subset, information indicating the size of the at least one further subset, and information indicating an orientation of the at least one further subset; or information identifying that one or more of the plurality of non-planar antennas are dedicated for use with certain frequencies

When the information indicating the geometry of the plurality of non-planar antennas comprises the vector map, a length of each vector may be defined relative to a vector between at least two of the reference antennas.

When the information indicating the geometry of the plurality of non-planar antennas comprises information defining the at least one further subset of the plurality of non-planar antennas, the information defining the at least one further subset may further comprises a distribution rule of antennas in the at least one further subset and/or a shape of the at least one further subset.

When the information indicating the geometry of the plurality of non-planar antennas comprises information indicating at least one of: an identifier, entity, manufacturer and/or model of the first device, the at least one processor may further cause the second device to: obtain, from a reference database and based on at least one of the identifier, entity, manufacturer and/or model of the first device, position information of the plurality of non-planar antennas of the first device.

According to an aspect, there is provided a method comprising: transmitting, to a second device, information indicating the geometry of a plurality of non-planar antennas of the first device; determining at least two reference antennas of the plurality of non-planar antennas based on the information indicating the geometry of the plurality of non-planar antennas; and transmitting, to the second device, reference signals via the determined at least two reference antennas while not transmitting reference signals via a remainder of the plurality of non-planar antennas.

The method may further comprise: determining, by the first device, at least one subset of the plurality of non-planar antennas for further transmission to the second device, wherein, from a planar perspective, the at least two reference antennas are outermost antennas of the at least one subset; and transmitting, from the first device to the second device using the determined at least one subset of the plurality of antennas, the further transmission.

The determined at least one subset of the plurality of non-planar antennas may be comprised in a uniform planar array structure or a uniform linear array structure.

The information indicating the geometry of the plurality of non-planar antennas may comprise information for determining channel state information for at least a subset of the plurality of non-planar antennas based on the reference signals transmitted via the determined at least two reference antennas.

The information indicating the geometry of the plurality of non-planar antennas may comprise information indicating the position and/or orientation of the plurality of non-planar antennas relative to at least one of the at least two reference antennas.

The information indicating the geometry of the plurality of non-planar antennas may comprise one or more of: information indicating at least one of: an identifier, entity, manufacturer and/or model of the first device; a vector map comprising, for each of the plurality of non-planar antennas, a vector defining the location of an antenna with respect to at least one of the at least two reference antennas; information indicating the location of the at least two reference antennas and information indicating the total number of antennas in the plurality of non-planar antennas and/or a rule for determining the position of each of the plurality of non-planar antennas; information defining at least one further subset of the plurality of non-planar antennas, wherein the information defining the at least one further subset comprises information indicating at least one further reference antenna indicating a starting location of the at least one further subset, information indicating the size of the at least one further subset, and information indicating an orientation of the at least one further subset; or information identifying that one or more of the plurality of non-planar antennas are dedicated for use with certain frequencies.

When the information indicating the geometry of the plurality of non-planar antennas comprises the vector map, a length of each vector may be defined relative to a vector between at least two of the reference antennas.

When the information indicating the geometry of the plurality of non-planar antennas comprises information defining the at least one further subset of the plurality of non-planar antennas, the information defining the at least one further subset may further comprise a distribution rule of antennas in the at least one further subset and/or a shape of the at least one further subset.

According to an aspect there is provided a method comprising: receiving, at a second device from a first device, information indicating the geometry of a plurality of non-planar antennas of the first device; based on the information, determining, by the second device, at least two reference antennas of the plurality of non-planar antennas; and receiving, at the second device from the first device, reference signals via the determined at least two reference antennas while not receiving reference signals via a remainder of the plurality of non-planar antennas.

The information indicating the geometry of the non-planar antennas may comprise information for determining channel state information for at least a subset of the plurality of non-planar antennas based on the reference signals sent via the determined at least two reference antennas.

The method may further comprise: receiving, at the second device from the first device, a further transmission from at least one subset of the plurality of non-planar antennas, wherein, from a planar perspective, the at least two reference antennas are outermost antennas of the at least a subset.

The method may further comprise: based on the information indicating the geometry of the plurality of non-planar antennas and the received reference signals, determining, by the second device, channel state information for the plurality of non-planar antennas; wherein receiving the further transmission is based on the determined channel state information.

The at least one subset of the plurality of non-planar antennas may be comprised in a uniform planar array structure or a uniform linear array structure.

The information indicating the geometry of the plurality of non-planar antennas may comprise information indicating the position and/or orientation of the plurality of non-planar antennas relative to at least one of the at least two reference antennas.

The information indicating the geometry of the plurality of non-planar antennas may comprise one or more of: information indicating at least one of: an identifier, entity, manufacturer and/or model of the first device; a vector map comprising, for each of the plurality of non-planar antennas, a vector defining the location of an antenna with respect to at least one of the at least two reference antennas; information indicating the location of the at least two reference antennas and information indicating the total number of antennas in the plurality of non-planar antennas and a rule for determining the position of each of the plurality of non-planar antennas; information defining at least one further subset of the plurality of non-planar antennas, wherein the information defining the at least one further subset comprises information indicating at least one further reference antenna indicating a starting location of the at least one further subset, information indicating the size of the at least one further subset, and information indicating an orientation of the at least one further subset; or information identifying that one or more of the plurality of non-planar antennas are dedicated for use with certain frequencies

When the information indicating the geometry of the plurality of non-planar antennas comprises the vector map, a length of each vector may be defined relative to a vector between at least two of the reference antennas.

When the information indicating the geometry of the plurality of non-planar antennas comprises information defining the at least one further subset of the plurality of non-planar antennas, the information defining the at least one further subset may further comprises a distribution rule of antennas in the at least one further subset and/or a shape of the at least one further subset.

When the information indicating the geometry of the plurality of non-planar antennas comprises information indicating at least one of: an identifier, entity, manufacturer and/or model of the first device, the method may further comprise: obtaining, by the second device from a reference database and based on at least one of the identifier, entity, manufacturer and/or model of the first device, position information of the plurality of non-planar antennas of the first device.

According to an aspect, there is provided a computer readable medium comprising instructions which, when executed by a first device, cause the first device to perform at least the following: transmitting, to a second device, information indicating the geometry of a plurality of non-planar antennas of the first device; determining at least two reference antennas of the plurality of non-planar antennas based on the information indicating the geometry of the plurality of non-planar antennas; and transmitting, to the second device, reference signals via the determined at least two reference antennas while not transmitting reference signals via a remainder of the plurality of non-planar antennas.

The instructions, when executed by the first device, may cause the first device to further perform: determining at least one subset of the plurality of non-planar antennas for further transmission to the second device, wherein, from a planar perspective, the at least two reference antennas are outermost antennas of the at least one subset; and transmitting, to the second device using the determined at least one subset of the plurality of antennas, the further transmission.

The determined at least one subset of the plurality of non-planar antennas may be comprised in a uniform planar array structure or a uniform linear array structure.

The information indicating the geometry of the plurality of non-planar antennas may comprise information for determining channel state information for at least a subset of the plurality of non-planar antennas based on the reference signals transmitted via the determined at least two reference antennas.

The information indicating the geometry of the plurality of non-planar antennas may comprise information indicating the position and/or orientation of the plurality of non-planar antennas relative to at least one of the at least two reference antennas.

The information indicating the geometry of the plurality of non-planar antennas may comprise one or more of: information indicating at least one of: an identifier, entity, manufacturer and/or model of the first device; a vector map comprising, for each of the plurality of non-planar antennas, a vector defining the location of an antenna with respect to at least one of the at least two reference antennas; information indicating the location of the at least two reference antennas and information indicating the total number of antennas in the plurality of non-planar antennas and/or a rule for determining the position of each of the plurality of non-planar antennas; information defining at least one further subset of the plurality of non-planar antennas, wherein the information defining the at least one further subset comprises information indicating at least one further reference antenna indicating a starting location of the at least one further subset, information indicating the size of the at least one further subset, and information indicating an orientation of the at least one further subset; or information identifying that one or more of the plurality of non-planar antennas are dedicated for use with certain frequencies.

When the information indicating the geometry of the plurality of non-planar antennas comprises the vector map, a length of each vector may be defined relative to a vector between at least two of the reference antennas.

When the information indicating the geometry of the plurality of non-planar antennas comprises information defining the at least one further subset of the plurality of non-planar antennas, the information defining the at least one further subset may further comprise a distribution rule of antennas in the at least one further subset and/or a shape of the at least one further subset.

According to an aspect, there is provided a computer readable medium comprising instructions which, when executed by a second device, cause the second device to perform at least the following: receiving, from the first device, information indicating the geometry of a plurality of non-planar antennas of a first device; based on the information, determining at least two reference antennas of the plurality of non-planar antennas; and receiving, from the first device, reference signals via the determined at least two reference antennas while not receiving reference signals via a remainder of the plurality of non-planar antennas.

The information indicating the geometry of the non-planar antennas may comprise information for determining channel state information for at least a subset of the plurality of non-planar antennas based on the reference signals sent via the determined at least two reference antennas.

The instructions, when executed by the second device, may cause the second device to further perform: receiving, from the first device, a further transmission from at least one subset of the plurality of non-planar antennas, wherein, from a planar perspective, the at least two reference antennas are outermost antennas of the at least a subset.

The instructions, when executed by the second device, may cause the second device to further perform: based on the information indicating the geometry of the plurality of non-planar antennas and the received reference signals, determining channel state information for the plurality of non-planar antennas; wherein receiving the further transmission is based on the determined channel state information.

The at least one subset of the plurality of non-planar antennas may be comprised in a uniform planar array structure or a uniform linear array structure.

The information indicating the geometry of the plurality of non-planar antennas may comprise information indicating the position and/or orientation of the plurality of non-planar antennas relative to at least one of the at least two reference antennas.

The information indicating the geometry of the plurality of non-planar antennas may comprise one or more of: information indicating at least one of: an identifier, entity, manufacturer and/or model of the first device; a vector map comprising, for each of the plurality of non-planar antennas, a vector defining the location of an antenna with respect to at least one of the at least two reference antennas; information indicating the location of the at least two reference antennas and information indicating the total number of antennas in the plurality of non-planar antennas and a rule for determining the position of each of the plurality of non-planar antennas; information defining at least one further subset of the plurality of non-planar antennas, wherein the information defining the at least one further subset comprises information indicating at least one further reference antenna indicating a starting location of the at least one further subset, information indicating the size of the at least one further subset, and information indicating an orientation of the at least one further subset; or information identifying that one or more of the plurality of non-planar antennas are dedicated for use with certain frequencies

When the information indicating the geometry of the plurality of non-planar antennas comprises the vector map, a length of each vector may be defined relative to a vector between at least two of the reference antennas.

When the information indicating the geometry of the plurality of non-planar antennas comprises information defining the at least one further subset of the plurality of non-planar antennas, the information defining the at least one further subset may further comprises a distribution rule of antennas in the at least one further subset and/or a shape of the at least one further subset.

When the information indicating the geometry of the plurality of non-planar antennas comprises information indicating at least one of: an identifier, entity, manufacturer and/or model of the first device, the instructions, when executed by the second device, may cause the second device to further perform: obtaining, from a reference database and based on at least one of the identifier, entity, manufacturer and/or model of the first device, position information of the plurality of non-planar antennas of the first device.

According to an aspect, there is provided a non-transitory computer readable medium comprising program instructions that, when executed by an apparatus, cause the apparatus to perform at least the method according to any of the preceding aspects.

In the above, many different embodiments have been described. It should be appreciated that further embodiments may be provided by the combination of any two or more of the embodiments described above.

### DESCRIPTION OF FIGURES

Embodiments will now be described, by way of example only, with reference to the accompanying Figures in which:
Figure 1 shows a representation of a network system according to some example embodiments;
Figure 2 shows a representation of a control apparatus according to some example embodiments;
Figure 3 shows a representation of an apparatus according to some example embodiments;
Figure 4 shows methods according to some examples;
Figure 5 shows an example illustrating a 3D vector map;
Figure 6a shows an example antenna geometry and Figure 6b shows an approximation of antenna geometry based on a uniform interpolation;
Figure 7 shows an example of shape mapping; and
Figure 8 shows an example transmitter device comprising a plurality of non-planar antennas.

### DETAILED DESCRIPTION

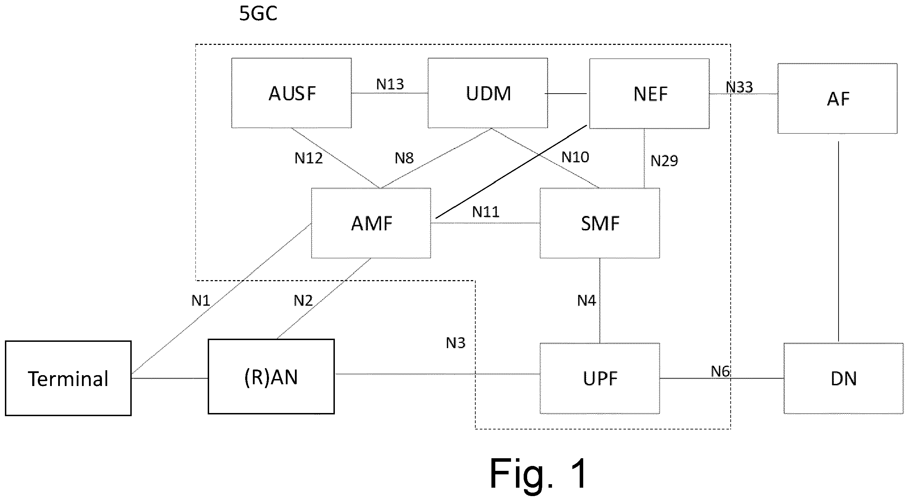

In the following certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, and mobile communication devices are briefly explained with reference to Figures 1, 2 and 3 to assist in understanding the technology underlying the described examples.

Figure 1 shows a schematic representation of a 5G system (5GS). The 5GS may be comprised by a terminal or user equipment (UE), a 5G radio access network (5GRAN) or next generation radio access network (NG-RAN), a 5G core network (5GC), one or more application function (AF) and one or more data networks (DN).

The 5G-RAN may comprise one or more gNodeB (GNB) or one or more gNodeB (GNB) distributed unit functions connected to one or more gNodeB (GNB) centralized unit functions. The 5GC may comprise the following entities: Network Slice Selection Function (NSSF); Network Exposure Function; Network Repository Function (NRF); Policy Control Function (PCF); Unified Data Management (UDM); Application Function (AF); Authentication Server Function (AUSF); an Access and Mobility Management Function (AMF); and Session Management Function (SMF). Figure 1 also shows the various interfaces (N1, N2 etc.) that may be implemented between the various elements of the system.

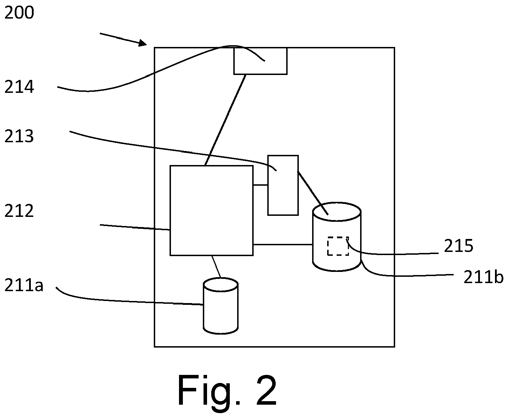

Figure 2 illustrates an example of a control apparatus 200 for controlling a function of the 5GRAN or the 5GC as illustrated on Figure 1. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the 5GRAN or the 5GC. In some embodiments, each function of the 5GRAN or the 5GC comprises a control apparatus 200. In alternative embodiments, two or more functions of the 5GRAN or the 5GC may share a control apparatus.

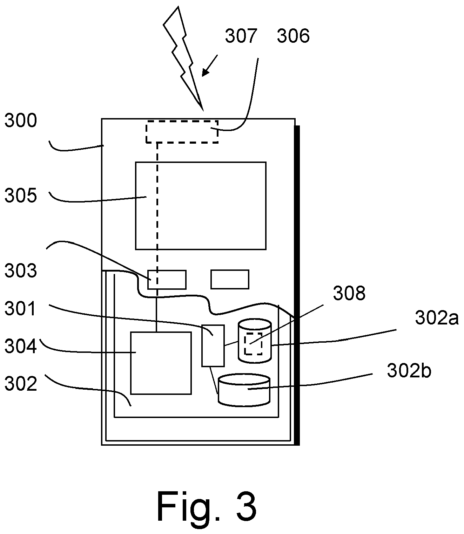

Figure 3 illustrates an example of a terminal 300, such as the terminal illustrated on Figure 1. The terminal 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, an Internet of things (IoT) type communication device or any combinations of these or the like. The terminal 300 may provide, for example, communication of data for carrying communications. The communications may be one or more of voice, electronic mail (email), text message, multimedia, data, machine data and so on.

The terminal 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device.

The terminal 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus can be provided on an appropriate circuit board and/or in chipsets. This feature is denoted by reference 304. The device may optionally have a user interface such as key pad 305, touch sensitive screen or pad, combinations thereof or the like. Optionally one or more of a display, a speaker and a microphone may be provided depending on the type of the device.

One aim of current (e.g. 5G) and future (e.g. 6G) technologies at mid-high frequencies (e.g. 7 to 20 GHz) is to bring uplink (UL) performance on par with downlink (DL) performance in terms of capacity and coverage. Increased carrier frequencies may allow increasing number of antennas at the UE, which may provide further possibilities in terms of multi-layer multiple input-multiple output (MIMO) communications for capacity enhancement and higher directivity in beamforming to increase the cell range of existing sites. However, a downside for the increased number of UE antennas is that higher number of reference signal (RS) resources may be needed to sound the antenna-wise radio channel.

In far-field, near line-of-sight (LOS) applications (where there is significant distance between transmitter and receiver) the UE may be assumed to have uniformly separated antennas. However, in shorter range LOS scenarios, non-uniform antenna or antenna array locations/geometry at the transmitter may impact the MIMO channel properties. As such, a thorough sounding of the antenna-wise channel may need performing to unlock the benefits that a high-rank channel brings. Thus, as the number of UE antennas increases, more resources may be needed for reference signals and channel estimation. This may result in a prohibitively high overhead.

The overhead may be reduced via exploitation of known transmitter antenna geometry, e.g. the way the antennas or antenna arrays are located at the transmitter. If the transmitter antenna geometry is known at the receiver, the receiver may only need channel sounding signals from the extreme antennas or antenna arrays of the transmitter and the rest of the channel may be interpolated based on the known transmit antenna geometry. As used herein, "extreme antennas" may be understood as being the outermost antennas or antenna arrays of the transmitter, which may be located on more than one plane (e.g. not in a one dimensional line or two dimension array). In some examples, a minimum number of antennas or antenna arrays may be defined - for example a minimum of two antennas in a uniform linear array, or three antennas in a uniform planar array or any arbitrary three-dimensional antenna or antenna array configuration.

This approach may reduce the number of required resources for channel sounding. However, this requires knowledge of the antenna/array locations to be signaled from transmitter to receiver, and an RS configuration that allocates RS transmissions to the extreme antennas. In case of antenna port virtualization, additional consideration may be needed for the logical mapping of antenna ports to antennas, so that the extreme antennas can be mapped for transmission.

Some examples may relate to transmitting, from a transmitter to a receiver, information indicating the antenna geometry of a transmitter device. Some examples may be applied for both UL or DL, or any other similar LOS MIMO link. Some examples may provide particular benefit where the transmitter (TX) - receiver (RX) distance is such that the antenna element geometry significantly affects the channel statistics (as an example, the near-field of the antenna array in short-range communications). However it should be understood that benefits may be achieved in other scenarios (e.g. far-field and/or non-line-of-sight), although in some cases to a lesser extent.

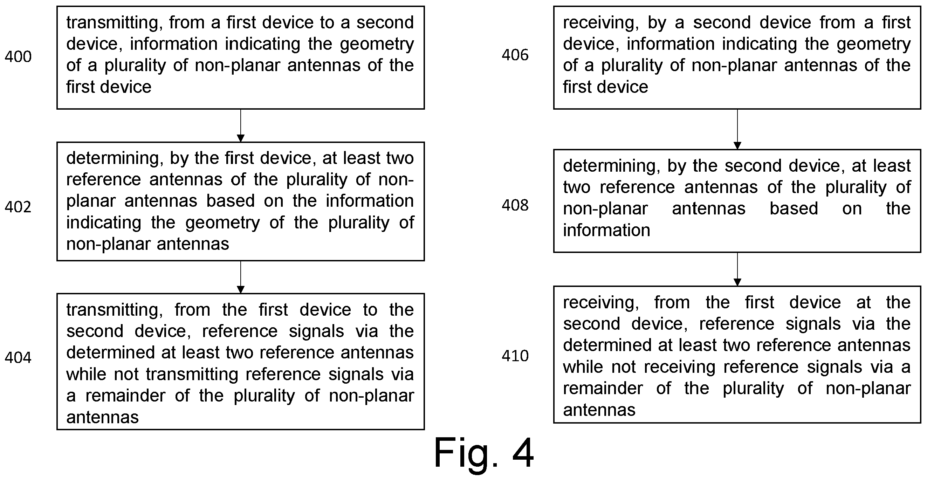

Reference is made to Figure 4, which shows methods according to some examples.

At 400, a method comprises transmitting, from a first device to a second device, information indicating the geometry of a plurality of non-planar antennas of the first device.

At 402, the method comprises determining, by the first device, at least two reference antennas of the plurality of non-planar antennas based on the information indicating the geometry of the plurality of non-planar antennas.

At 404, the method comprises transmitting, from the first device to the second device, reference signals via the determined at least two reference antennas while not transmitting reference signals via a remainder of the plurality of non-planar antennas.

At 406, a method comprises receiving, by a second device from a first device, information indicating the geometry of a plurality of non-planar antennas of the first device.

At 408, the method comprises determining, by the second device, at least two reference antennas of the plurality of non-planar antennas based on the information.

At 410, the method comprises receiving, from the first device at the second device, reference signals via the determined at least two reference antennas while not receiving reference signals via a remainder of the plurality of non-planar antennas.

In some examples the first device may be a transmitter device (also referred to herein as a transmitter) and the second device may be a receiver device (also referred to herein as a receiver). Examples of transmitter and/or receiver device include, but are not limited to, access node (e.g. gNB), user equipment.

In some examples, the transmitter device may determine at least two reference antennas of a plurality of non-planar antennas of the transmitter device. The plurality of non-planar antennas may be physically located on or at the transmitter device (e.g. antennas integral to a device such as a UE), or may be antennas attached on an object and used by the transmitter device to perform transmission (e.g. conformal antennas attached on an object). In the context of the present disclosure antennas of the transmitter device are understood as being antennas that may be used by the transmitter device to transmit or receive signals (e.g. reference signals) and/or channels (e.g. associated with data or control information).

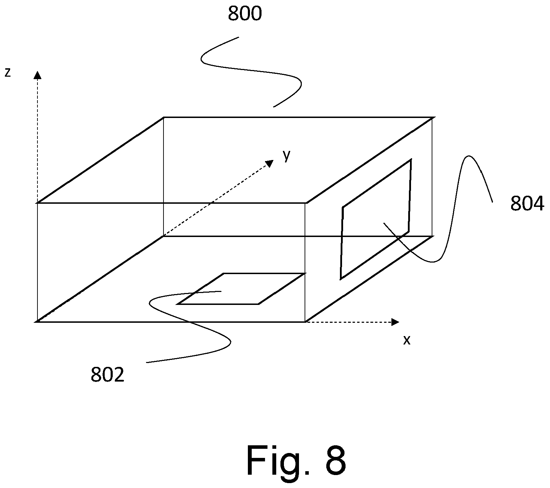

In some examples, the plurality of non-planar antennas may comprise a plurality of antennas located on at least two planes of the transmitter device or object on which the antennas are attached. For example, Figure 8 shows an example of a transmitter device 800 comprising a plurality of non-planar antennas, where the plurality of non-planar antennas comprises a first uniform planar antenna array 802 on a first plane and a second uniform planar antenna array 804 on a second plane, where the first uniform planar antenna array 802 is located on the x-y physical plane, which is different to the y-z physical plane on which the second uniform planar antenna array 804 is located. In this context, an array is understood as comprising one or more antennas or antenna elements.

While Figure 8 shows uniform planar antennas arrays 802 and 804, it should be understood that in some examples non-uniformly placed antennas may instead be used - for example a first set of non-uniformly placed antennas on the first (e.g. x-y) plane and a second set of non-uniformly placed antennas on the second (e.g. y-z) plane. In some examples, the plurality of non-planar antennas may comprise a plurality of antennas located on any combination of at least two planes in a 3-dimensional space.

In some examples, the transmitter device may transmit, to a receiver device, reference signals using the determined at least two reference signals. While transmitting these reference signals, the transmitter device may not transmit reference signals on the other antennas.

In some examples, the transmitter device may determine at least a subset of the plurality of non-planar antennas for further transmission(s) to the receiver device. The at least a subset may in some examples comprise all of the plurality of non-planar antennas or may comprise a subset of the plurality of non-planar antennas. From a planar perspective, the at least two reference antennas may be the outermost antennas of the selected at least a subset.

In some examples, the transmitter device may transmit information indicating the transmitter antenna geometry to the receiver device. In some examples the information indicating the geometry of the plurality of non-planar antennas may comprise information for determining channel state information for the plurality of non-planar antennas based on the reference signals sent via the determined at least two reference antennas.

For example, the receiver device may use the information indicating the transmitter antenna geometry and the reference signals received from the reference antennas to determine the channel-state information for antennas that are located "in between" the reference antennas. The receiver device may for example interpolate the channel state information. The receiver device may use the determined channel-state information for receiving the further transmission(s) from the transmitter device.

In some examples the determination (e.g. interpolation) can be applied over the whole set of non-planar antenna elements or a subset (such as a sub-array of an antenna array). For example, the reference antennas may be outermost antennas of the subset, and the determination (e.g. interpolation) may be applied for the intervening antennas of the subset. In some examples the determination (e.g. interpolation) may be frequency-independent. In some examples, information about dedicated antennas for other frequencies may be reported from transmitter to receiver, and the antenna geometry report can be applied for all frequencies by the receiver selecting the set of active antennas used for other frequencies.

In some examples, the receiver may maintain or otherwise access a look-up table, database or the like (which may be referred to herein as a reference database), comprising a plurality of entries of antenna geometry information.

In some examples, information indicating different transmitter antenna geometries may be pre-configured information indicating antenna positions stored as entries in a look-up table, database or the like stored at or otherwise accessible by at the receiver. The information indicating the antenna geometry sent by the transmitter to the receiver may comprise information indicating one of the entries.

The receiver may then determine the positions of the antennas at the transmitter based on the pre-configured information and determine the channel state information associated with the non-transmitting antennas in-between accordingly.

In some examples some of the transmitter antennas may be in an inactive state. The receiver may determine the channel state information for the inactive antennas based on the reference signals transmitted from the reference antennas. In this case, the inactive antennas (and their corresponding channel vectors) may remain unused.

In some examples, pre-configured information stored in the look-up table, database or the like may comprise information indicating antennas that are dedicated for use with frequencies other than the one(s) used for reference signal transmission. Thus, for example in near-deterministic scenarios (shorter range, LOS), the channel estimates obtained in one frequency can be simply interpolated on other frequencies, since the antenna position is known.

In some examples there may be multiple look-up tables, databases or the like specific to the total number of transmitter antenna elements. In this way, the number of entries in any given single look up table, database or the like may be limited. In some examples there may be a separate database for antennas dedicated to a particular frequency.

In some examples the look-up table, database or the like may comprise device-specific antenna geometry information. For example, the identity, entity, manufacturer, and/or model of the transmitter may be signalled to the receiver and used by the receiver to determine the antenna geometry from the look-up table, database or the like. The entries may be provided by device manufacturers to provide a representation of the transmitter device antenna geometry, or at least an equivalent geometry that provides sufficient accuracy for any application of the antenna element geometry as side information.

For example, the transmitter may send information to the receiver comprising an identifier of the transmitter. The receiver may access a database of device-specific geometry information and determine the antenna positions based on the database entry corresponding to the identifier of the transmitter.

In some examples, the information indicating the antenna geometry may comprise explicit signalling of the antenna geometry. The antenna geometry may be reported with differing levels of accuracy.

In some examples, the information indicating the antenna geometry may comprise a descriptive three-dimensional map of the antennas/arrays and how they map on the device. For example, a 3D vector map (e.g., coordinates) may be provided. A reference antenna may be identified and placed at the origin or a known, fixed location and the location of the rest of the antennas defined by 3D vectors that point to their respective locations (coordinates). This map may be used to separately determine the antennas dedicated for other frequencies.

In some examples, to determine the correct inter-antenna distance, the absolute vector lengths can be used to define the physical distance between antennas. In other examples, the vector lengths can be normalized between [0,1], where the distance to the furthest antenna used as a scaling multiplier.

In some examples, antennas dedicated for frequencies other than the reference signal frequency may be included in the vector map but may be indicated as being dedicated for a different frequency.

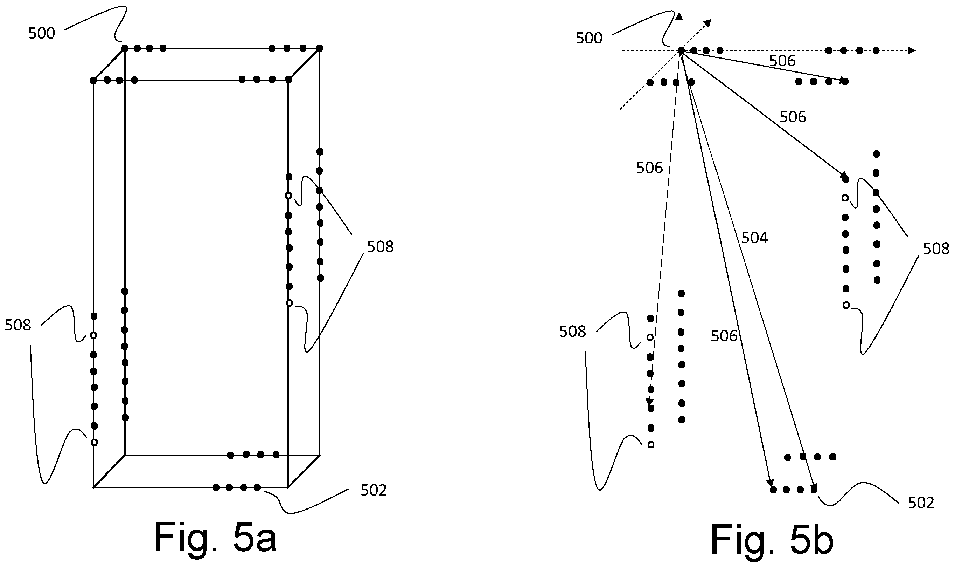

An example illustrating a 3D vector map is shown in Figure 5. In Figure 5a, the physical boundaries of the transmitter device are illustrated by the solid lines, while the dots represent the antennas or antenna elements. It should be understood that the shape of transmitter device and antenna geometry shown in Figure 5a is for illustration purposes only, and that other shapes of transmitter device and/or antenna geometries are possible while remaining within the scope of the present disclosure. In Figure 5b, a vector map is shown, where a first reference antenna 500 and second reference antenna 502 are determined.

In some examples the reference antennas may be selected based on the orientation of the transmitter device. The reference antennas may be "extreme antennas", in that they may be determined as being the outermost antennas from a planar perspective. In the example of Figure 5a, the determined reference antennas are non-planar, in that they are located on different planar surfaces of the transmitter. From a planar perspective may in some examples be understood by transforming the 3D coordinates of the antenna locations onto a 2D plane. The transformation may be based on the orientation of the transmitter device or object on which the plurality of antennas of the transmitter device are located. For example, in Figure 5a, when the 3D transmitter is transformed onto a 2D plane, antennas 500 and 502 are outermost antennas, and so may be determined as reference antennas.

The vector 504 between the first reference antenna 500 and second reference antenna 502 may be used to define the maximum distance to which the distances of the other vectors 506 are normalized. Antennas 508 represent antennas dedicated for a different frequency. While only four other vectors 506 are shown in Figure 5b, it should be understood that one vector may be provided for each antenna, and that only four vectors are shown for clarity.

In some examples, the information indicating the antenna geometry may comprise an approximation based on reference antennas. For example, the information may indicate the location of the reference antennas at the transmitter, and the position of the rest of the antennas between the reference antennas may be determined according to some rule (for example, uniform distribution).

In some examples, when the reference antennas are the outermost antennas of the device, then all the other antenna locations lie between the extreme antennas and may be deduced based on the total number of antenna elements in the transmitter.

If one or more of the antennas are dedicated for other frequencies, their locations can be similarly interpolated, or explicitly reported. In such cases, the determination result may be different, for example it may be sparser for lower frequencies, etc.

In some examples, the information indicating the antenna geometry may comprise an explicit information about the locations of the extreme antennas and information indicating the total number of antennas and the determination rule. To find the antenna elements dedicated for other frequencies, another similar report can be sent, based on the same extreme antennas.

In some examples, the reference antennas may not be at the outermost antenna locations of the device. In such cases, additional information indicating how the reference antennas are located in relation to other transmit antenna elements (e.g., how many elements away from the edges are they located) may be included in the information indicating the antenna geometry. To find the antenna elements dedicated for other frequencies, another similar report can be sent, based on the same reference antennas.

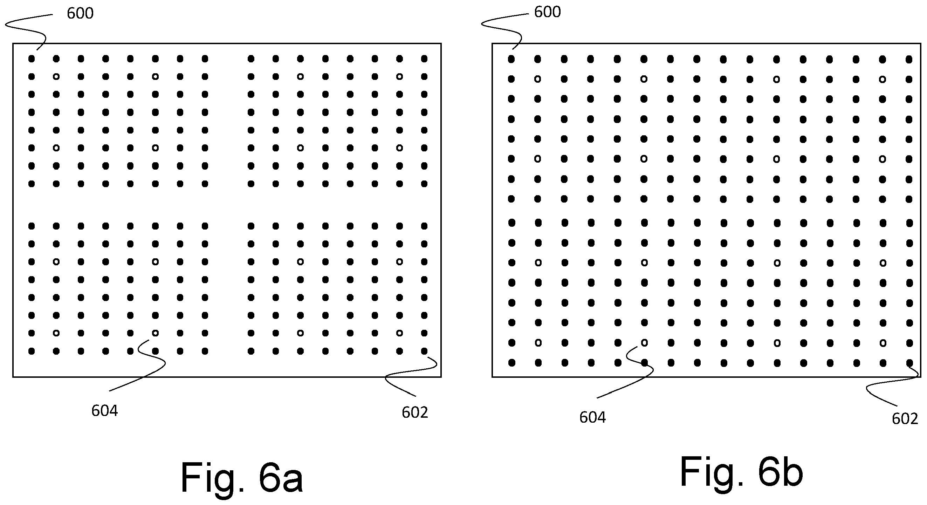

Figure 6 illustrates an example antenna geometry in Figure 6a and approximation of antenna geometry based on a uniform interpolation in Figure 6b. Antennas 600 and 602 may act as reference antennas. Antennas shown as white dots in Figure 6b, such as antenna 604, represent antennas dedicated to other frequencies. As can be seen, the uniform interpolation of antenna geometry may give rise to an error in antenna position for some of the antennas. However, the margin of error may be acceptable given the decreased signalling overhead and complexity provided by this approach.

In some examples, a hybrid approach may be taken, where the information indicating the antenna geometry may comprise an approximation and/or information about locations of separate antenna groupings with respect to a reference antenna. The separate antenna groups may for example comprise uniform or otherwise defined subsets of antennas mapped on to the transmitter device based on a reference antenna position.

In some examples, the information about locations of separate antenna groupings may comprise information about the shape of the subset. The information about the shape may include:
a further reference antenna, which may indicate the starting location of the shape with respect to the reference antenna,
information defining the size of the shape - for example an antenna count or the number of rows and columns of an array of antenna elements, and inter-antenna distance, and
orientation of the shape.

In some examples, additional information may be included, such as a distribution rule (uniform/other), and the shape (ULA, UPA, L-shaped, etc.). Antenna elements dedicated for other frequencies may also be included in the shape description, or they may be described as separate shapes that overlap with other shapes.

In some examples, the shape may be defined by information by describing the shape on the physical device via three 3-dimensional vectors that point to the extreme antenna elements on the shape. Along with inter-antenna distance (or the number of rows and columns of antenna elements), this information may identify a uniform array, its location, and rotation in a simpler format.

In some examples, shape-mapping as described above may reduce the signalling overhead when compared to explicit antenna-wise signalling, for example in cases where the number of transmit antenna elements is high. The shape mapping approach described above may also more accurate than approximation based on full determination methods (e.g. based on full interpolation). In some examples the shapes may be pre-configured in a look-up table, database or the like, in a similar manner to that described previously.

In some examples, to scale the shape map, the antenna elements representing the shape starting locations may be given as vectors (coordinates) with scaling with respect to a vector between two reference antennas.

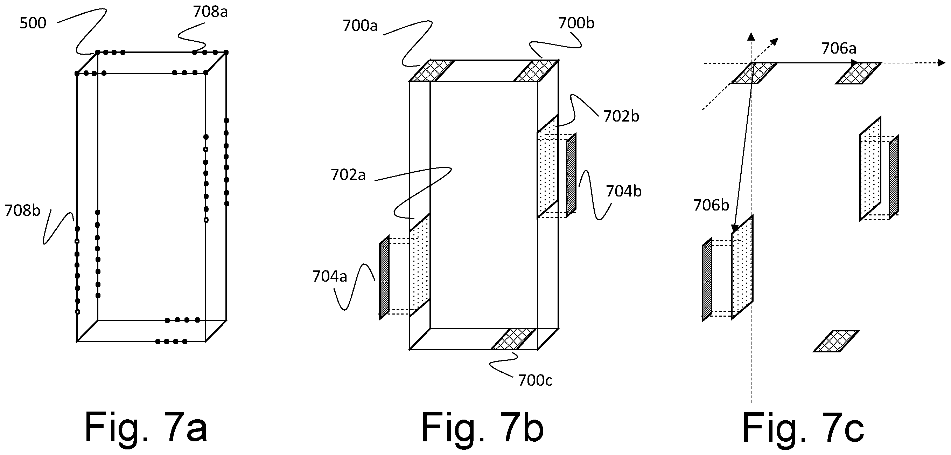

Figure 7 illustrates an example of the shape mapping techniques described above. In Figure 7a, the antenna geometry of a transmitter device is shown, which is the same as described above in relation to Figure 5a. Figure 7b shows an illustration of the antenna geometry described in shapes - three arrays 700a-c of 2x4 antennas, two arrays 702a-b of 2x8 antennas, and two arrays 704a-b of 1x2 antennas dedicated to other frequencies (note that the antennas in this shape are dedicated to another frequency, and so the shape is defined in this example as a 1x2 shape, but with an inter-antenna distance six times higher than the shapes 700a-c and 702a-b). Shapes 704a-b overlap with shapes 702a-b.

Each shape may be defined with respect to a vector between the first reference antenna 500 and a reference antenna for each shape - for example as shown in Figure 7c, shape 700b may be defined by a vector 706a between the first reference antenna 500 and reference antenna 708a of shape 700b. Similarly shape 702a may be defined with respect to vector 706b between the first reference antenna 500 and the reference antenna 708b of shape 702a.

The reference antenna(s) described above may refer to or identify a physical anchor point that is fixed on the transmitter. The other antennas may then be mapped in relation to that fixed point.

In some examples the information indicating the antenna geometry may be provided in UE capability signalling (UL) or an explicit report from the access node (DL). In some examples the information indicating the antenna geometry may only be needed once until either the TX or RX entity leaves the communication.

Some examples may be based on either a full antenna (array) element geometry, or on a sub-array basis, for example, if a gNB only uses a section of its full array to serve a UE in the network.

The abovementioned examples may be frequency-independent, and by including information about dedicated antennas for other frequencies, the antenna geometry report can be applied for all frequencies by correctly selecting the set of active antennas used for other frequencies.

Thus, in some examples, a transmitter may transmit reference signals to a receiver via at least two reference antennas. The at least two reference antennas may be determined based on information indicating the geometry of the antennas of the transmitter. The receiver may also obtain the information indicating the geometry of the antennas, either explicitly (e.g. in the form of a vector map) or implicitly (e.g. based on the transmitter device type and information stored in a database). The receiver may then determine the location of the other antennas, and determine CSI based on the received reference signals and the determined location of the other antennas. This may allow the receiver to receive further transmissions from the other antennas. As such, some examples may reduce channel sounding requirements, and thereby reduce signalling overhead. Therefore some examples may improve the efficiency of the network.

In some examples a first device may comprise means for: transmitting, to a second device, information indicating the geometry of a plurality of non-planar antennas of the first device; determining at least two reference antennas of the plurality of non-planar antennas based on the information indicating the geometry of the plurality of non-planar antennas; and transmitting, to the second device, reference signals via the determined at least two reference antennas while not transmitting reference signals via a remainder of the plurality of non-planar antennas.

In some examples a first device may comprise at least one processor and at least one memory storing instructions that, when executed by the at least one processor, cause the first device at least to: transmit, to a second device, information indicating the geometry of a plurality of non-planar antennas of the first device; determine at least two reference antennas of the plurality of non-planar antennas based on the information indicating the geometry of the plurality of non-planar antennas; and transmit, to the second device, reference signals via the determined at least two reference antennas while not transmitting reference signals via a remainder of the plurality of non-planar antennas.

In some examples a second device may comprise means for: receiving, from a first device, information indicating the geometry of a plurality of non-planar antennas of a first device; based on the information, determining at least two reference antennas of the plurality of non-planar antennas; and receiving, from the first device, reference signals via the determined at least two reference antennas while not receiving reference signals via a remainder of the plurality of non-planar antennas.

In some examples a second device may comprise at least one processor and at least one memory storing instructions that, when executed by the at least one processor, cause the second device at least to: receive, from the first device, information indicating the geometry of a plurality of non-planar antennas of a first device; based on the information, determine at least two reference antennas of the plurality of non-planar antennas; and receive, from the first device, reference signals via the determined at least two reference antennas while not receiving reference signals via a remainder of the plurality of non-planar antennas.

It is understood that references in the above to various network functions (e.g., to an AMF, an SMF, etc.) may comprise apparatus that perform at least some of the functionality associated with those network functions. Further, an apparatus comprising a network function may comprise a virtual network function instance of that network function.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal ) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims.

Indeed, there is a further embodiment comprising a combination of one or more embodiments with any of the other embodiments previously discussed.

## Claims

1. A first device comprising means for:
transmitting, to a second device, information indicating the geometry of a plurality of non-planar antennas of the first device;
determining at least two reference antennas of the plurality of non-planar antennas based on the information indicating the geometry of the plurality of non-planar antennas; and
transmitting, to the second device, reference signals via the determined at least two reference antennas while not transmitting reference signals via a remainder of the plurality of non-planar antennas.

2. The first device of claim 1, wherein the means is for:
determining at least one subset of the plurality of non-planar antennas for further transmission to the second device, wherein, from a planar perspective, the at least two reference antennas are outermost antennas of the at least one subset; and
transmitting, to the second device using the determined at least one subset of the plurality of antennas, the further transmission.

3. The first device of claim 2, wherein the determined at least one subset of the plurality of non-planar antennas are comprised in a uniform planar array structure or a uniform linear array structure.

4. The first device of any preceding claim, wherein the information indicating the geometry of the plurality of non-planar antennas comprises information for determining channel state information for at least a subset of the plurality of non-planar antennas based on the reference signals transmitted via the determined at least two reference antennas.

5. The first device of any preceding claim, wherein the information indicating the geometry of the plurality of non-planar antennas comprises information indicating the position and/or orientation of the plurality of non-planar antennas relative to at least one of the at least two reference antennas.

6. The first device of any preceding claim, wherein the information indicating the geometry of the plurality of non-planar antennas comprises one or more of:
information indicating at least one of: an identifier, entity, manufacturer and/or model of the first device;
a vector map comprising, for each of the plurality of non-planar antennas, a vector defining the location of an antenna with respect to at least one of the at least two reference antennas;
information indicating the location of the at least two reference antennas and information indicating the total number of antennas in the plurality of non-planar antennas and/or a rule for determining the position of each of the plurality of non-planar antennas;
information defining at least one further subset of the plurality of non-planar antennas, wherein the information defining the at least one further subset comprises information indicating at least one further reference antenna indicating a starting location of the at least one further subset, information indicating the size of the at least one further subset, and information indicating an orientation of the at least one further subset; or
information identifying that one or more of the plurality of non-planar antennas are dedicated for use with certain frequencies.

7. The first device of claim 6, wherein:
when the information indicating the geometry of the plurality of non-planar antennas comprises the vector map, a length of each vector is defined relative to a vector between at least two of the reference antennas; and
when the information indicating the geometry of the plurality of non-planar antennas comprises information defining the at least one further subset of the plurality of non-planar antennas, the information defining the at least one further subset further comprises a distribution rule of antennas in the at least one further subset and/or a shape of the at least one further subset.

8. A second device comprising means for:
receiving, from a first device, information indicating the geometry of a plurality of non-planar antennas of the first device;
based on the information, determining at least two reference antennas of the plurality of non-planar antennas; and
receiving, from the first device, reference signals via the determined at least two reference antennas while not receiving reference signals via a remainder of the plurality of non-planar antennas.

9. The second device claim 8, wherein the information indicating the geometry of the non-planar antennas comprises information for determining channel state information for at least a subset of the plurality of non-planar antennas based on the reference signals sent via the determined at least two reference antennas.

10. The second device of any of claims 8 to 9, wherein the means is further for:
receiving, from the first device, a further transmission from at least one subset of the plurality of non-planar antennas, wherein, from a planar perspective, the at least two reference antennas are outermost antennas of the at least a subset.

11. The second device of claim 10, wherein the means is further for:
based on the information indicating the geometry of the plurality of non-planar antennas and the received reference signals, determining channel state information for the plurality of non-planar antennas;
wherein receiving the further transmission is based on the determined channel state information.

12. The second device of any of claims 8 to 11, wherein the information indicating the geometry of the plurality of non-planar antennas comprises one or more of:
information indicating at least one of: an identifier, entity, manufacturer and/or model of the first device;
a vector map comprising, for each of the plurality of non-planar antennas, a vector defining the location of an antenna with respect to at least one of the at least two reference antennas;
information indicating the location of the at least two reference antennas and information indicating the total number of antennas in the plurality of non-planar antennas and a rule for determining the position of each of the plurality of non-planar antennas;
information defining at least one further subset of the plurality of non-planar antennas, wherein the information defining the at least one further subset comprises information indicating at least one further reference antenna indicating a starting location of the at least one further subset, information indicating the size of the at least one further subset, and information indicating an orientation of the at least one further subset; or
information identifying that one or more of the plurality of non-planar antennas are dedicated for use with certain frequencies.

13. A method comprising:
transmitting, from a first device to a second device, information indicating the geometry of a plurality of non-planar antennas of the first device;
determining, by the first device, at least two reference antennas of the plurality of non-planar antennas based on the information indicating the geometry of the plurality of non-planar antennas; and
transmitting, from the first device to the second device, reference signals via the determined at least two reference antennas while not transmitting reference signals via a remainder of the plurality of non-planar antennas.

14. A method comprising:
receiving, by a second device from a first device, information indicating the geometry of a plurality of non-planar antennas of the first device;
determining, by the second device, at least two reference antennas of the plurality of non-planar antennas based on the information; and
receiving, from the first device at the second device, reference signals via the determined at least two reference antennas while not receiving reference signals via a remainder of the plurality of non-planar antennas.
